Europäisches Patentamt

European Patent Office

Office européen des brevets

(11) Publication number: **0 541 868 A1**

## EUROPEAN PATENT APPLICATION

(21) Application number: **91310509.4**

(22) Date of filing: **14.11.91**

(51) Int. Cl.5: **B62D 7/14**, //B60G5/02,
B60G21/045, A01D34/63

(43) Date of publication of application:
**19.05.93 Bulletin 93/20**

(84) Designated Contracting States:
**AT DE FR GB**

(71) Applicant: **EXCEL INDUSTRIES, INC.**
**P.O. Box 7000**
**Hesston, Kansas 67062(US)**

(72) Inventor: **Mullet, Paul W.**

**31 Parkview Road**
**Hesston, Kansas 67062(US)**
Inventor: **Voth, Elmer D.**
**Route No.2, P.O. Box 172**
**Newton, Kansas 67114(US)**

(74) Representative: **Warren, Anthony Robert et al**
**BARON & WARREN, 18 South End,**
**Kensington**
**London W8 5BU (GB)**

(54) **Vehicle provided with four-wheel coordinated steering.**

(57) The invention relates to a four-wheel vehicle including provision for controlling the steering position of each of the four wheels (32L, 34L; 32R, 34R) so that the rolling axes of all the wheels will intersect at a common point (X) around which the vehicle will turn. The control is provided by a pair of cables (46L, 46R), one on each side of the vehicle, each cable interconnecting a pair of front and back wheels to pivot the wheels of that pair through similar angles in opposite directions.

The variance in angular turning between wheels on opposite sides of the vehicle is achieved by wrapping each cable around an associated cam pulley (52, 58). The two cam pulleys (52, 58) are identical, and are mounted in antiphase on opposite ends of a common transverse shaft (60) so that they rotate in unison while their winding radius is changing. The two cables (46L, 46R) are separately driven at different rates by a pair of double-acting hydraulic cylinders connected in parallel to a conventional power steering unit, whereby the winding in and paying-out of the cables on the cam pulleys (52, 58) at different radii as they rotate in unison causes the wheels on opposite sides to pivot at different angular rates.

FIG 1

FIG 5

The present invention is directed toward a four – wheel vehicle, for example a four – wheel drive vehicle, having four – wheel steering which pivots all four wheels so that their individual rolling axes will intersect at a common point around which the vehicle will turn. This is sometimes referred to as Ackerman – type steering. To avoid scuffing and slippage of the steering wheels as the vehicle is turning, the inboard and outboard wheels will pivot at different angular rates with the rolling axes of all four wheels intersecting at a common point.

Coordinated steering systems of this type are disclosed in US – A – 4,373,603, 2,910,131, 4,852,679 4,957,183. These systems suffer from the disadvantage that they are relatively complex.

It is an object of the present invention to provide an improved simplified Ackerman – type four – wheel steering system which is relatively simple in design while effectively achieving an infinite number of turning radii.

The invention is directed to a motor vehicle having four – wheel coordinated steering of the general type disclosed in US – A – 4,852,679 and 4,957,183, and including

first and second pairs of wheels, each pair including a front wheel and a rear wheel on each side of the vehicle, the wheels being mounted for turning movement about individual axes to effect steering of the vehicle,

first and second turning means coupled, respectively, to the first and second pairs of wheels, for turning the wheels of the associated pair in opposite directions from each other about their associated turning axes,

steering means for transmitting linear movement to the first and second turning means, and

coupling means, including cam means, coupled to the first and second turning means respectively, and operable, when the steering means is actuated to turn the vehicle, to cause the wheels of the first pair, and the wheels of the second pair, respectively, to follow first and second circumferences having a common centre lying on a line disposed transversely between the front and rear wheels of each pair.

The vehicle according to the invention is characterised in that

the first and second cam means respectively comprise first and second cam pulleys mounted for rotation in unison by means of a rotatable shaft arrangement mounted transversely of the vehicle, and

each turning means drivingly cooperates with its associated cam pulley, and includes first and second elongate portions extending generally tangentially in opposite directions from the associated cam pulley, the first and second elongate portions defining therebetween an included angle of approximately 180°, or approaching 180°,

whereby, upon actuation of the steering means to turn the vehicle, the coupling between the first and second turning means via the cam pulleys and shaft arrangement, the driving cooperation between the first turning means and the first cam pulley, and the driving cooperation between the second turning means and the second cam pulley, determines the differential movement between the first and second turning means necessary to cause the wheels of the first and second pairs to follow said first and second circumferences.

The steering system embodying the invention may be used to advantage in combination with a vehicle suspension system of the side beam or walking beam type. Suspensions of this general type are disclosed in US – A – 3,504,928 and 4,957,183. Such a system is intended to maintain the central or main frame or carriage of the vehicle in a substantially level plane while the individual wheels are deviating vertically as the vehicle traverses uneven terrain. The central frame of the vehicle supports a pair of side members, beams or frames, one on each side, which in turn each support a pair of wheels, one at the front and the other at the rear of the side frame, which are also journalled for steering rotation about individual generally upright or vertical turning axes directly over each wheel. The two side frames are both journalled to the central frame at their centre point about a common horizontal axis through the plane of the vehicle frame. Each side frame is free to rock about its journal as the individual wheels come in contact with changes in terrain. The side frames are also interconnected, and connected to the central frame, through a pair of transverse bars, one at the front and the other at the rear of the vehicle. Each bar is rockably connected at its midpoint to the central frame, and its opposite ends are connected to the associated ends of the right and left side frames.

With a conventional four – wheel suspension system, as one wheel passes over an obstruction, for example a 15.24 cm (six inch) obstruction, the vehicle frame at that corner also rises 15.24 cm (six inches). However, with the system just outlined incorporating the independently walking side frames, when one wheel passes over an obstruction, the central frame will only rise half that distance, due to the geometry of the traverse bars and their midway attachment point to the central frame.

In one embodiment, as applied to a vehicle incorporating such a walking side beam suspension system, the simplified four – wheel steering system turns the wheels on each side of the vehicle through a like angle in opposite directions. This is achieved by an associated control cable and pulley arrangement carried by the associated side beam or frame. The Ackerman – type steering, which is achieved between the inside pair and the outside pair of wheels, is accomplished by wrapping the control cables on opposite sides around similarly – shaped cam pulleys, each having symmetrical halves, which are attached to opposite ends of a common transverse shaft rotatably journalled to the vehicle so that the angular rotation of one cam pulley will always coincide with that of the opposite cam pulley. Since each cam pulley has a varying radius therearound, uniform rotation angles of the pulleys will achieve a varying amount of lineal cable wrapping and unwrapping as dictated by the changing cam pulley radius.

The steering or control cables on opposite sides of the vehicle are controlled by a pair of double – acting hydraulic cylinders, each of which is connected at its opposite ends to opposite ends of its associated cable. The hydraulic pressure for actuating these cylinders in either direction may be provided by a conventional power steering unit, such as that illustrated in US – A – 4,043,419, wherein pressure is provided to the same ends of both cylinders through a parallel circuit, so that the two cylinders are not hydraulically tied together and they can move at different rates. Once the two steering cylinders are energized with pressure at a common end, their rate of lineal movement relative to each other is controlled mechanically through the transverse shaft and the respective cam pulleys around which the cables must wrap and unwrap as they move. The rate of change in the lineal movement between the two cables is governed by the particular cam pulley shape which, in turn, is dictated by the wheel base and track width of the vehicle on which they are utilized.

One embodiment of the invention will now be described with reference to the accompanying drawings, in which: –

Figure 1 is a perspective view of the vehicle illustrating the suspension and steering system generally;

Figure 2 is a side view of the vehicle illustrated in Figure 1;

Figure 3 is a symbolic view of the hydraulic power steering circuit along with the control cables, cam pulleys and drive pulleys in a left – turn position;

Figure 4 is a symbolic plan view of the wheel and cam pulley positions in a straight – ahead position;

Figure 5 is a symbolic plan view of the wheel and cam pulley positions in a right – turn position;

Figure 6 is a similar symbolic plan view with the cam pulley and wheel positions in a zero radius turn;

Figure 7 is a front elevational view of the vehicle;

Figure 8 is a partial plan view of the grass cutting head geometry and its lateral movement feature;

Figure 9 is an enlarged plan view of one of the cam pulleys; and

Figure 10 is a perspective view of the cam pulley with a portion of its control cable wrapped therearound.

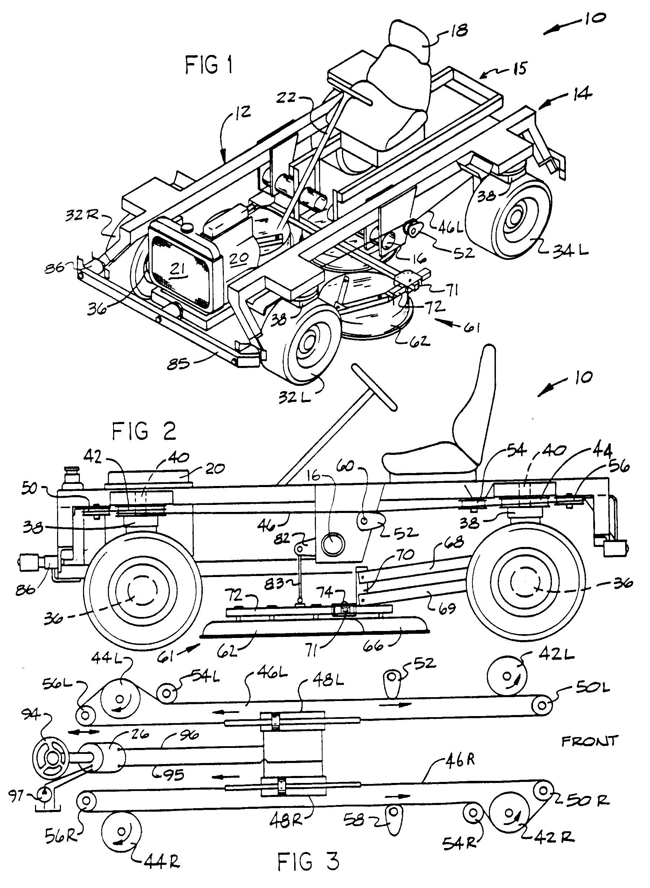

Referring now to the drawings wherein the preferred embodiment of the invention is shown, a tractor vehicle, generally indicated at 10, includes three separate assemblies which move relative to one another, namely a central or main frame or carriage 15, and right and left side members, beams or frames 12 and 14. Both side frames 12 and 14 are rotatably mounted to the central frame 15 by a common horizontal shaft or journal 16, as seen in Fig. 1. Central frame 15 comprises a platform for supporting a mower head assembly 61, seat 18, motor 20, radiator 21 and steering column 22. Attached to the lower end of steering column 22, as shown in Fig. 3, is a conventional power steering unit 26 symbolically shown, which is well – known in the prior art, as for example in US – A – 4,043,419, and is not described in detail.

Each of the right and left side frames 12 and 14 are essentially identical and, therefore, only left side frame 14 will be described in detail. Each side frame supports a pair of wheels 32 and 34 driven by conventional high torque hydraulic motors 36. The wheels are directly mounted to the drive shafts of their respective motors 36 which, in turn, are each mounted on an L – shaped wheel bracket 38. Brackets 38 are, in turn, rotatably journalled to side frame 14 through a vertical shaft 40 which provides a turning axis for each wheel which is directly over the centre of the wheel and is, for example, generally perpendicular to the generally horizontal plane of the vehicle frame. Also attached to wheel brackets 38, and concentrically mounted on shafts 40, are front and rear steering pulleys 42 and 44 respectively.

The steering connection between the front and back wheels 32L and 34L is achieved through a cable 46L, which can best be seen in Fig. 3. The ends of cable 46L are connected to the opposite ends of a double – acting hydraulic cylinder 48L which has piston rods extending from both ends of the cylinder. In following the cable 46L at the front of the vehicle, it first passes from the front or right piston rod as viewed in Fig. 3, around an idler pulley 50L, then wraps completely around a steering pulley 42L, and an idler pulley 54L after it wraps twice around a cam pulley 52. Cable 46L continues to the left, wrapping around a steering pulley 44L in the opposite direction from its rotation around front steering pulley 42L. After one complete wrap around steering pulley 44L, cable 46L passes around a third idler pulley 56L, and then attaches to the rear or left piston rod of cylinder 48L to form a closed loop. Idler pulleys 56 can be adjustably shifted as indicated by the arrow in Fig. 3 to adjust the tension in the cable loop. Cable 46R which is located on right side frame 12 is shown in schematic Fig. 3 below cable 46L, and is driven by a like cylinder 48R, and wraps around a similar set of pulleys 50R, 42R, 54R and 56R in a like manner with one exception. The right and left cables 46 do not wrap around cam pulleys 52 and 58 in the same manner. In the Fig. 3 position, the left cable 46L is wrapping and unwrapping around the larger swing radius end of cam pulley 52 while the right cable 46R is wrapping and unwrapping around the short swing radius of cam pulley 58. Both cam pulleys 52 and 58 are rigidly attached to a transverse shaft 60 (Fig. 2) which in turn is rotatably journalled to right and left side frames 12 and 14.

The cam pulleys 52 and 58 are displaced relative to each other about the axis of the shaft 60 by 180°. As shown in Figs. 1, 2 and 4, in the straight ahead position, the major axis of the left hand cam pulley 52 is directed horizontally rearward whilst the right hand cam pulley (not visible in Figs. 1 and 2) is disposed with its major axis directed horizontally forwardly. In this position, each cable passes substantially horizontally to and from its associated cam pulley, and is wrapped therearound by several complete turns, i.e. by multiples of 360°. Since cam pulleys 52 and 58 must move together in angular movement, the varying wrapping radii of the cables 46 cause differing rates of movement between the two cables, causing differing turn rates between the inside and outside wheels, which will be described in detail later.

While, in the illustrated embodiment, the tractor vehicle is specifically utilized as a grass mowing tractor, it has equal utility in other applications which require a highly manoeuvrable vehicle or platform.

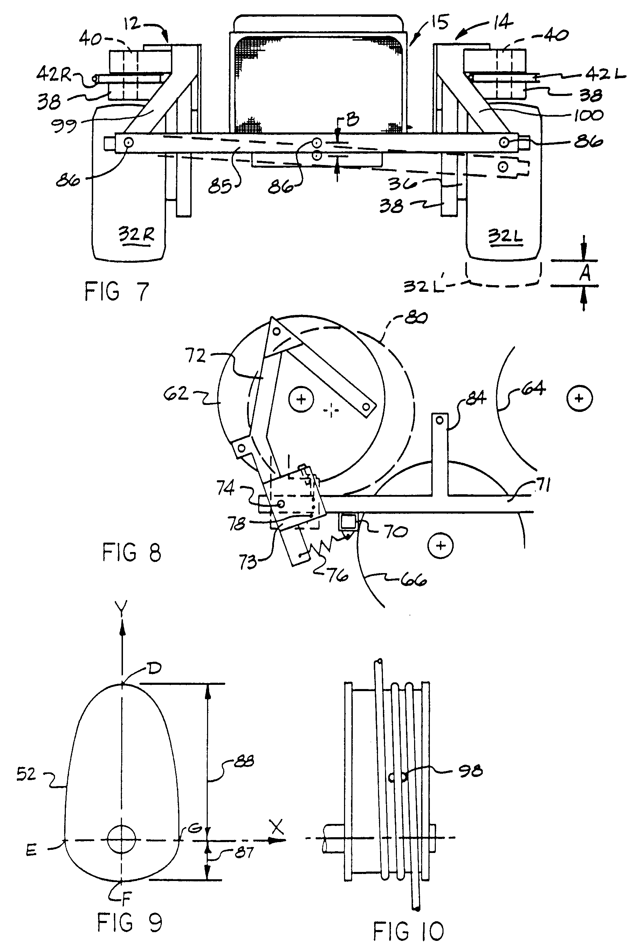

The grass mower cutting heads 62, 64 and 66, are positioned under the tractor, as best seen in Figs. 2, 3 and 8. One or more of the cutting heads, and in this embodiment the two foremost cutting heads 62, 64, are each supported by a parallelogram structure, including a pair of horizontal links 68 and 69 which are pivotally connected to the centre frame and to a vertical link 70. Attached to link 70 is a transverse beam member 71 which, in turn, supports a mower head support arm 72 in a cantilevered manner, as shown in Fig. 8. Support arm 72 includes an expanded lateral section 73, and a pivot pin 74 extends through the lateral section 73 and through the beam 71. Arm 72 includes an extension extending past its pivot pin 74 for providing an attachment point for a tension spring 76, as seen in Fig. 8. Spring 76, which in turn is anchored to beam 71, attempts to swing mower head 62 and its support arm 72 outward until a limit stop bolt 78 comes into contact with transverse beam 71. Bolt 78 can be selectively positioned in one of a plurality of holes which will vary the outward extension of head 62, which will vary the cutting swath of the tractor 10. Due to the tension from spring 76, the mowing head 62 (or 64) which projects transversely between the front and rear wheels, and its support arm 72, can be deflected inwardly when an obstruction is encountered, to the dotted line position 80, as shown in Fig. 8.

The vertical height of the cutting heads is controlled by a rotatable arm 82 (Fig. 2) which connects to the mower head assembly 61 through cable 83 and stub shaft 84 fixed to the transverse beam 71, as shown in Fig. 8. The lifting cable 83 varies the height of mower head assembly 61, while the links 68 and 69 maintain the mower assembly in a horizontal plane regardless of its height.

The grass mower heads are conventional in design, and can be driven by a variety of means, such as hydraulic motors. The details of the latter are not shown in the drawings since they are not a part of the present invention.

The suspension system of the vehicle includes two side frames 12 and 14 pivotally joined to the carriage or central frame 15 of the vehicle, as previously discussed. Each side frame is also connected to the central frame of the vehicle by transverse bars 85, as seen in Figs. 1 and 7. Bar 85 is pivotally mounted at its centre to centre frame 15 by a bolt and rubber mounts 86. The outer ends of bar 85 are also rotatably connected to extension arms 99 and 100 on side frames 12 and 14 through similar bolt and rubber mounts 86 so as to allow a degree of lateral movement of the bolts and mounts as the individual wheels move upward or downward, due to the resilience of the mounts.

Extension arms 99 and 100 extend outward so that bolts 86 on opposite sides of tractor 10 have the maximum space therebetween which in turn allows the minimum angular rotation of bar 85 and lateral movement of the bolts.

## SUSPENSION SYSTEM OPERATION

The operation of the suspension system can be best illustrated by referring to Figs. 7 and 1. As the vehicle 10 is traversing an uneven surface and its front left wheel 32L drops in a depression as indicated by 32L', the left side beam 14 of the vehicle will rock on its horizontal shaft 16. In looking at the front of the vehicle in Fig. 7, the horizontal bar 85 will drop a distance "A" similar to wheel 32L while the central frame 15 will only drop a distance "B" as indicated at its centre point. While the individual four wheels can experience substantial vertical movement, due to the suspension system, the enter frame 15 of the vehicle will have substantially less movement in the vertical plane compared to that of conventional vehicles, thus minimizing the tilting and vertical shift of the cutting head assembly 61 of the vehicle.

STEERING OPERATION

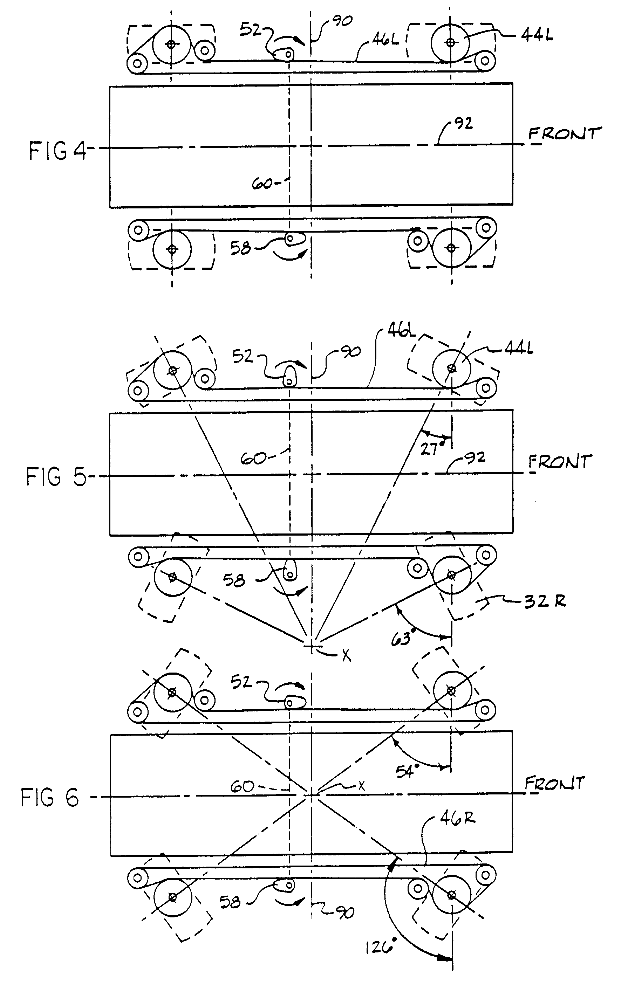

With four‒wheel Ackerman‒type steering, the scuffing or slipping of the wheels during turns is essentially eliminated, which minimizes damage to the turf. The difference in the rate of turning between the inboard and outboard wheels is controlled by the shape of the cam pulleys, the cam pulley 52 being shown in Fig. 9. The minimum and maximum wrapping radiuses 87 and 88 are dictated by the wheel base and track width of the particular vehicle. As, for example, in the Fig. 5 illustrated turn, each inboard wheel is turned through an angle of 63˚ while each outboard wheel has turned through a 27˚ angle. If the track width of the wheels was made wider than as illustrated, it can readily be seen that the angular difference between the inboard and outboard wheels will increase.

With the vehicle wheels in the straight ahead non‒turning position as illustrated in Fig. 4, the turning radius of the vehicle is essentially infinity until a turn is initiated. Since both the forward and rear outboard pair of wheels turns through a like angle in opposite directions, the intersecting point of the rolling axes (point X) will always lie along transverse line 90 at some lateral distance from the longitudinal centre line 92 of the vehicle. This distance will be referred to as the turning radius of the vehicle.

Cam pulleys 52 and 58, which have identical shapes, are illustrated in Figs. 3, 4, 5 and 6 with their axes turned 90˚ from their actual position merely for purposes of illustration so that the position of each cam pulley with regard to its steering cable wrapped therearound can be seen in the plan views of the vehicle. In actuality, cam pulleys 52 and 58 lie in vertical planes, as seen in Fig. 2, and rotate with, and about the axis of, a common shaft 60 having a horizontal transverse axis.

From the straight ahead position, as illustrated in Fig. 4, to the right‒turn position of Fig. 5, the cam pulleys 52 and 58 and their connecting shaft 60 will be rotated 90˚ to the Fig. 5 position. When cam pulley 52 is rotated clockwise 90˚ from its Fig. 4 position, the cable 46L will wrap from point E to point F (see Fig. 9) which in the specific example, is a distance of 5.36 cm (2.11 inches) along the circumference of the cam pulley. In the specific example, the wheel base of the vehicle is 190.5 cm (75 inches), the track width is 138.7 cm (54.6 inches), the steering pulleys are 22.86 cm (9 inches) in diameter, the minimum cam pulley radius 87 is 2.79 cm (1.1 inches) and the maximum cam pulley radius 88 is 10.92 cm (4.3 inches). Lineal movement of the left cable 46L a distance of 5.25 cm (2.11 inches) will cause a 22.86 cm (9 inch) steering pulley 44L to rotate through roughly 27˚, as indicated in Fig. 5. Rotation of cam pulley 58 in a counter‒ clockwise direction 90˚ from its Fig. 4 position will cause the right cable to wrap a circumferential distance which computes to 12.57 cm (4.95 inches) on the cam pulley circumference. This lineal movement of the right cable will turn front wheel 32R through an angle of approximately 63˚, as shown in Fig. 5, with the rolling axes of the inside and outside wheels intersecting at point X, the centre of rotation of the vehicle. The turning radius of the vehicle in this position is approximately 116.84 cm (46 inches) from point X to the centre line 92 of the vehicle.

In. Fig. 6, the wheels have been turned to the right as far as possible with the outboard wheels turning approximately 54˚ while the inboard wheels have turned 126˚. The point X about which the vehicle turns is now the centre point of the vehicle and therefore the turning radius is now zero since the vehicle merely rotates about point X. As can be seen, in this position, the cam pulleys have both been rotated through 180˚, which for the outboard wheels is a lineal distance on the cam pulley circumferential between points G, F and E, while the lineal distance travelled by the inboard cable 46R is the circumference distance on the cam pulley between points G, D and E. Again, as in all other wheel positions, the rolling axes of both the inboard and outboard wheels will intersect along transverse line 90 which is half way between the front and back wheels 32 and 34.

Cables 46L and R are each wrapped around their associated cam pulley 52 and 58 two complete times as shown in Fig. 10, since complete right and left turns involve rotation of the cam pulley through 360˚. The cable 46 is anchored to the cam pulley surface by a u‒bolt 98, as shown in Fig. 10, to prevent any sliding of the cable on the pulley. Similar anchors are provided on steering pulleys 42 and 44. If the diameter of steering pulleys 42 and 44 were changed, the cam pulley 52 would also need to be changed in size proportionally. The shape would remain the same, but the circumference of the cam pulley must be equal to half of the circumference of the steering pulley.

The shape of the cam pulley can be empirically calculated with Fig. 9 and the following:

$$Y = \sqrt{1.227 - 4.985X^2} \text{ For } Y \leq 0$$

$$Y = \frac{(.680X + .249Y)^2}{.533} + 2.724X - 6.411 \quad \text{For } Y \geqslant 0$$

Fig. 3 illustrates the positions of the control cylinders 48, wheels and cam pulleys after a left turn comparable to the right turn of Fig. 5. A left turn of steering wheel 94 causes power steering unit 26 to direct pressure from pump 97 through line 95 to the right end of both cylinders 48L and 48R, while line 96 connected to the opposite end of both control cylinders is open to drain. Both the piston rods in the right and left cylinders 48 will move at different rates since cam pulley 52 and cam pulley 58 must move together in angular rotation while the respective cables on opposite sides are winding up and paying – out at different rates, as previously discussed. From comparing the Fig. 4 and the Fig. 3 positions, it can be seen that cam pulley 52 is wrapping towards its maximum swing radius G D (see Fig.9), and therefore the piston in cylinder 48L has moved farther to the left than the piston in cylinder 48R which has wrapped a lesser lineal distance EF (see Fig. 9). Leftward movement of both cables causes the wheels 42L and 42R to turn to the left as indicated by the arrows, while rear wheels 44L and 44R turn in opposite directions as indicated by the arrows. To return the wheels to the straight ahead position, steering wheel 94 is merely turned in a clockwise direction so that power steering unit 26 drains line 95 while pressurizing line 96 to cause the hydraulic cylinders to return to their centred positions.

Each of the cam pulleys, is configured in two symmetrical halves about its major axis D F as shown in Fig. 9. In addition, as previously explained, the cable approaches and leaves the cam pulley at effectively the same tangential location on the cam pulley. Thus, the differential steering action between the inboard and outboard wheels will be the same, when turning to the right or left, and the tension in each cable will remain effectively constant.

The transverse line 90 on which the rolling axes of the wheels intersect is located behind the transverse centre line of the two foremost cutting heads 62, 64 of the mower head assembly 61. Therefore, the four – wheel steering of the present system responds like conventional two – wheel steering, i.e. an operator may steer in a normal manner to move the outer transverse extremities of the cutting heads 62, 64 closer to or away from an obstruction.

While not shown in the drawing, each cam pulley could include a spiral groove in its surface for receipt of the wrapped cable 46 to assist in preventing the cable from wrapping on itself. Another alternative configuration not illustrated, would be to substitute a chain such as a roller type chain, or a toothed belt, for the cables 46, or at least that portion of the cable which tightly wraps around the cam pulleys 52 and 58. If a chain or belt was used for the cable or a portion thereof, the cam pulleys 52 and 58 would include teeth for receiving the chain. The cam chain or belt need not be wrapped around the toothed cam pulley or sprocket but could simply pass tangentially across the sprocket in a straight line, means being provided to hold the chain or belt in mesh with the sprocket. In this event, the meshing portion of the chain or belt could be rigid, i.e. replaced by a toothed rack element meshing with a cam pulley in the form of a pinion.

The cam pulleys, eccentrics, or equivalent, could be indirectly connected to the transverse shaft 60, for example so that they are located with their axes vertically disposed. The cam pulleys need not be mutually displaced by 180° as viewed in Fig. 4, but may be mutually in phase with one cable wrapping around its cam pulley from above, and the other wrapping around its cam pulley from below, as viewed in Fig. 4.

The cam pulleys or equivalent need not have identical profiles in order to produce the Ackerman – type steering effect. For example, one of the cam pulleys or equivalent may be circular, and the other may be eccentrically profiled to produce the Ackerman effect.

**Claims**

**1.** A motorised vehicle having four – wheel coordinated steering, including

first and second pairs of wheels, each pair including a front wheel (32L, 32R) and a rear wheel (34L, 34R) on each side of the vehicle, the wheels being mounted for turning movement about individual axes (40) to effect steering of the vehicle,

first and second turning means (46L, 46R) coupled, respectively, to the first and second pairs of wheels, for turning the wheels (32L, 34L; 32R, 34R) of the associated pair in opposite directions from each other about their associated turning axes (40),

steering means (94, 26, 48) for transmitting linear movement to the first and second turning means (46L, 46R), and

coupling means, including cam means, coupled to the first and second turning means respectively, and operable, when the steering means is actuated to turn the vehicle, to cause the wheels of the first pair, and the wheels of the second pair, respectively, to follow first and second circumferences having a common centre (X) lying on a line (90) disposed transversely between the front and rear wheels of each pair,

characterised in that

the first and second cam means respectively comprise first and second cam pulleys (52, 58) mounted for rotation in unison by means of a rotatable shaft arrangement (60) mounted transversely of the vehicle, and

each turning means (46L, 46R) drivingly cooperates with its associated cam pulley (52, 58), and includes first and second elongate portions extending generally tangentially in opposite directions from the associated cam pulley, the first and second elongate portions defining therebetween an included angle of approximately 180˚, or approaching 180˚,

whereby, upon actuation of the steering means to turn the vehicle, the coupling between the first and second turning means via the cam pulleys (52, 58) and shaft arrangement (60), the driving cooperation between the first turning means (46L) and the first cam pulley (52), and the driving cooperation between the second turning means (46R) and the second cam pulley (58), determines the differential movement between the first and second turning means necessary to cause the wheels of the first and second pairs to follow said first and second circumferences.

2. A vehicle as claimed in claim 1, wherein the first and second elongate portions of each turning means (46L, 46R) include a flexible elongate element passing around the associated cam pulley (52, 58) by effectively one or more complete turns.

3. A vehicle as claimed in claim 2, wherein at least the first and second elongate portions of each turning means (46L, 46R) comprise a cable wrapped around the associated cam pulley (52, 58) by two or more complete turns, and anchored to the cam pulley surface.

4. A vehicle as claimed in claim 1, 2 or 3, wherein the shaft arrangement (60) comprises a generally horizontal transverse shaft, and the cam pulleys (52, 58) are rigidly mounted on the shaft on opposite sides of the vehicle so as to rotate in unison with the shaft about the generally horizontal axis of the shaft.

5. A vehicle as claimed in any preceding claim, wherein both cam pulleys are identical in profile and each cam pulley (52, 58) has a major axis (Y) about which its cam profile is symmetrical, the major axes of both cam pulleys being substantially parallel to the longitudinal axis of the vehicle in the straight line position of the wheels, and wherein the first and second elongate portions of each turning means (46L, 46R) are generally tangential to the associated cam pulley on the minor axis (X) thereof in said straight line position, the turning means and associated cam pulleys being so disposed that, upon rotation of the shaft, the tangent defined by the elongate portions of one turning means (46L, 46R) travels along the cam profile (ED or GD) from the minor axis (X) towards the larger radius end (D) of the profile on the major axis (Y), whilst the tangent defined by the elongate means of the other turning means (46R or 46L) travels along the cam profile (EF or GF) from the minor axis (X) towards the smaller radius opposite end (F) of the profile on the major axis (Y).

6. A vehicle as claimed in claim 5, wherein the elongate portions of one turning means (46L, 46R) separates from its associated cam pulley (52, 58) at a point on that cam pulley 180˚ displaced from the point where the elongate portions of the other turning means separates from its associated cam pulley.

7. A vehicle as claimed in any preceding claim, wherein the vehicle includes a carriage or frame arrangement (15, 12, 14) disposed in a generally horizontal plane, wherein each of the wheels (32L, 34L; 32R, 34R) is mounted for steering rotation with respect to said arrangement (15, 12, 14), about individual axes or shafts (40) extending generally perpendicular to said plane, and wherein each wheel is connected to a drive pulley (42L, 44L; 42R, 44L) for rotating the wheel about its associated axis (40), and wherein each turning means (46L, 46R) comprises a cable wrapped around its associated cam pulley (52, 58), and wrapped in opposite directions around the drive pulleys (42L, 44L; 42R, 44R) of the front and rear wheels of the associated pair.

**8.** A vehicle as claimed in claim 7, wherein the carriage or frame arrangement includes a central carriage (15), and first and second side beams (14, 12) extending in the fore – and – aft direction of the vehicle, mounted on opposite sides of the central carriage and rockable relative thereto about a common generally horizontal transverse axis, generally centrally of the side beams, the first and second pairs of wheels (32L, 34L; 32R, 34R), the associated drive pulleys (42L, 44L; 42R, 44R), the first and second cables (46L, 46R), and the first and second cam pulleys (52, 58), being mounted, respectively, on the first and second side beams (14, 12).

**9.** A vehicle as claimed in any preceding claim, wherein the steering means includes means (48L, 48R) operable to transmit linear movement to at least one of said turning means (46L, 46R), and the latter turning means is operable, via the cam pulleys (52, 58) and shaft arrangement (60), to control the linear movement of the other turning means (48R, 48L).

**10.** Apparatus as claimed in claim 9, wherein the steering means includes a steering wheel (94) connected to and operable to control a power steering unit (26) having two working ports, a pair of double acting hydraulic cylinders comprising the linear movement transmitting means (48L, 48R), each cylinder being connected to an associated one of the first and second turning means (46L, 46R), the two working ports of the power steering unit being connected to the opposite ends of both hydraulic cylinders in parallel, whereby the cylinders can act at differing linear rates.

**11.** A vehicle as claimed in any preceding claim, including a plurality of grass mowing heads (62, 64, 66) attached to a carriage or frame (15) of the vehicle, at least one of the heads (62) being supported on a cantilevered arm (72) which is pivotally mounted on the frame (15) for movement in a generally horizontally plane about a generally vertical axis (74), biasing means (76) being attached to the arm to urge the head (62) laterally outwardly in the same generally horizontal plane, whereby the head is deflectable inwardly upon contact with an obstruction.

**12.** A vehicle as claimed in any preceding claim, including three or more grass mowing heads (62, 64, 66) positioned in a generally horizontal plane and attached to a carriage or frame (15) of the vehicle, the two outer heads (62, 64) each being supported on an associated cantilevered arm (72) pivotally mounted on the frame (15) about a generally vertical axis (74) for lateral movement of the outer head, biasing means (76) being attached to the arms (72) to urge the heads laterally outwardly whereby a head may be deflected upon contact with an obstruction, and adjustable stop means (78) being provided on the arms to permit adjustable lateral positioning of the outer heads to change the overall cutting width of the vehicle.

FIG 1

FIG 2

FIG 3

FRONT

FIG 4

FIG 5

FIG 6

EP 0 541 868 A1

FIG 7

FIG 8

FIG 9

FIG 10

11

European Patent Office

# EUROPEAN SEARCH REPORT

Application Number

EP    91 31 0509

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | US-A-4 957 183 (MULLETT ET AL.)<br><br>* claims 1,8,10 *<br>* column 6, line 48 - line 66; figure 10 *<br>--- | 1,7,8,<br>11,12 | B62D7/14<br>//B60G5/02<br>B60G21/045<br>A01D34/63 |
| Y | US-A-4 934 726 (DAENENS ET AL)<br><br>* column 4, line 19 - column 5, line 7; figure 6 *<br>--- | 1,7,8,<br>11,12 | |
| A | DE-A-1 938 493 (CKD PRAHA)<br>* figure *<br>--- | 1,4 | |
| A | GB-A-885 613 (RATEAU)<br>* page 2, line 57 - line 122; figures *<br>* page 3, line 33 - line 44 *<br>--- | 1 | |
| A | PATENT ABSTRACTS OF JAPAN<br>vol. 12, no. 336 (M-739)9 September 1988<br>& JP-A-63 097 469 ( DAIHATSU MOTOR ) 28 April 1988<br>* abstract *<br>--- | 1 | |
| A | PATENT ABSTRACTS OF JAPAN<br>vol. 7, no. 183 (M-235)(1328) 12 August 1983<br>& JP-A-58 085 759 ( KOBAYASHI SHIYARIYOU SEISAKUSHO ) 23 May 1983<br>* abstract *<br>--- | 1 | TECHNICAL FIELDS SEARCHED (Int. Cl.5)<br><br>B62D<br>B60G<br>B60K<br>A01D |
| A,D | US-A-4 852 679 (FRY)<br>* abstract *<br>--- | 1 | |
| A | US-A-2 715 534 (HOGE ET AL)<br>* figure 10 *<br><br>----- | 1 | |

The present search report has been drawn up for all claims

| Place of search | Date of completion of the search | Examiner |
|---|---|---|
| BERLIN | 06 JULY 1992 | BROYDE M. |

EPO FORM 1503 03.82 (P0401)